# EUROPEAN PATENT APPLICATION

(11) **EP 4 614 676 A1**
(43) Date of publication of application: **10.09.2025**
(21) Application number: 24214050.7
(22) Date of filing: 19.11.2024
(51) Int. Cl.: H01M 10/613, H01M 10/617, H01M 10/653, H01M 10/6555, H01M 10/6551, H01M 10/647

(54) **BATTERY PACK**

(30) Priority: 04.03.2024 KR 20240030417
(71) Applicant: Samsung SDI Co., Ltd., Yongin-si, Gyeonggi-do 17084 (KR)
(72) Inventor: YEOM, Gil Choun, 17084 Yongin-si (KR)
(74) Representative: Marks & Clerk LLP

(57) **Abstract**

A battery pack may include battery cells; a cooling plate on one side of the battery cells; and an insulation member having an insulation part, a pair of first heat transfer parts on both sides of the insulation part, and a first layer in at least a portion of the first heat transfer part and having a higher thermal conductivity than the insulation part. A temperature deviation between top and bottom portions of an electrode plate inside a cell can be reduced, thereby improving the cooling performance of the cell. In addition, the lifespan of a cell can be extended by improving cooling performance, and the safety of a battery pack can be improved by preventing events such as deterioration and heat generation.

## Description

### BACKGROUND

### 1. Field

Embodiments of the present disclosure relate to a battery pack.

### 2. Description of the Related Art

In general, unlike primary batteries which are not rechargeable, a secondary battery can be discharged and charged. A secondary battery is used as an energy source of, for example, a mobile device, an electric vehicle, a hybrid vehicle, an electric bicycle or an uninterruptible power supply (UPS). According to the type of external device used with the batteries, a secondary battery may be used in the form of a single battery or a battery pack in which a plurality of batteries are connected. Secondary batteries in the form of battery packs are mainly applied to devices that operate for a long time and require high power, such as hybrid cars or electric cars.

In battery packs applied to automobiles, safety is an important factor, and thus improvement of cooling performance, which is one of the greatest impacts on safety, is needed.

The above information disclosed in this Background section is only for enhancement of understanding of the background of the invention and therefore it may contain information that does not constitute prior art.

### SUMMARY

Embodiments of the present disclosure provide a battery pack which can improve cooling performance and safety by reducing a temperature deviation between top and bottom portions of an electrode assembly inside a battery cell.

A battery pack according to an embodiment of the present disclosure may include: battery cells; a cooling plate on one side of the battery cells; and an insulation member, for example between adjacent battery cells, having an insulation part, a pair of first heat transfer parts on both sides of the insulation part, and a first layer in at least a portion of the first heat transfer part that has a higher thermal conductivity than the insulation part.

The insulation part may be made of or may include an insulating material.

The insulation part may have a shape corresponding to the long sides of the battery cells.

The top end of the insulation part may have substantially the same height as the top ends of the battery cells or may have a height that protrudes from the top ends of the battery cells.

The pair of first heat transfer parts may be between the long side of one of the battery cells and the long side of the insulation part.

The first heat transfer part may have substantially the same height as the top end of the insulation part or may have a height lower than the top end of the insulation part.

The first heat transfer part may be a metal plate having a higher thermal conductivity than the insulation part.

The cooling plate may be at the bottom ends of the battery cells.

The first heat transfer part may include a support part in which the lower end facing the cooling plate is bent at a preset angle, and a heat conducting layer on the plate surface facing the insulation part and having a higher thermal conductivity than the insulation part.

The support part may be bent upward at an angle of less than 90 degrees relative to the cooling plate.

The end of the support part that is bent upward may support the lower end of the insulation part.

The insulation member may further include a second heat transfer part including a first layer and a second layer in a region excluding the first layer.

The first layer and the second layer may be on the plate surface of the first heat transfer part facing one of the battery cells.

Each of the battery cells may include a hexahedral case, an electrode assembly accommodated in the case, a cap plate coupled to the top of the case, and a pair of electrode terminals electrically connected to the electrode assembly and on the cap plate.

The first layer may be in a region adjacent to the electrode terminal.

The second layer may be made of or may include a material having a lower thermal conductivity than the first layer.

Each of the first layer and the second layer may be a coating layer on the first heat transfer part.

A thermal interface material (TIM) between the support part, the battery cells, and the cooling plate may be included.

At least some of the above and other features of the invention are set out in the claims.

### BRIEF DESCRIPTION OF THE DRAWINGS

FIG. 1 is a perspective view showing a battery pack according to an embodiment of the present disclosure.
FIG. 2 is an exploded perspective view of the battery pack according to FIG. 1.
FIG. 3 is a diagram schematically showing cross sections of some cells and an insulation member according to FIG. 1.
FIG. 4 is an enlarged schematic diagram showing the structure of the insulation member according to FIG. 3.
FIG. 5 is a front view showing a partial structure of the insulation member according to FIG. 3.

### DETAILED DESCRIPTION

Examples of the present disclosure are provided to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, as an example, the term "below" can encompass both an orientation of above and below.

Hereinafter, a battery pack according to an embodiment of the present disclosure will be described in detail with reference to the accompanying drawings.

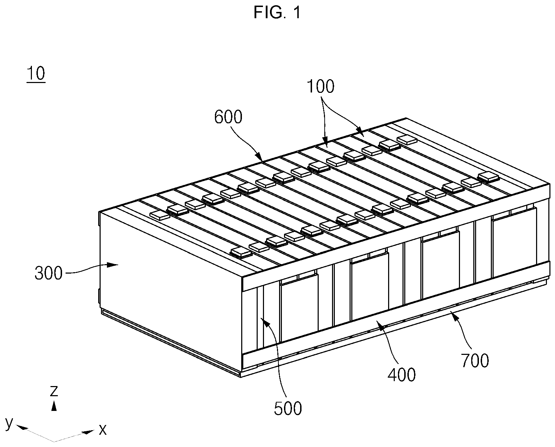

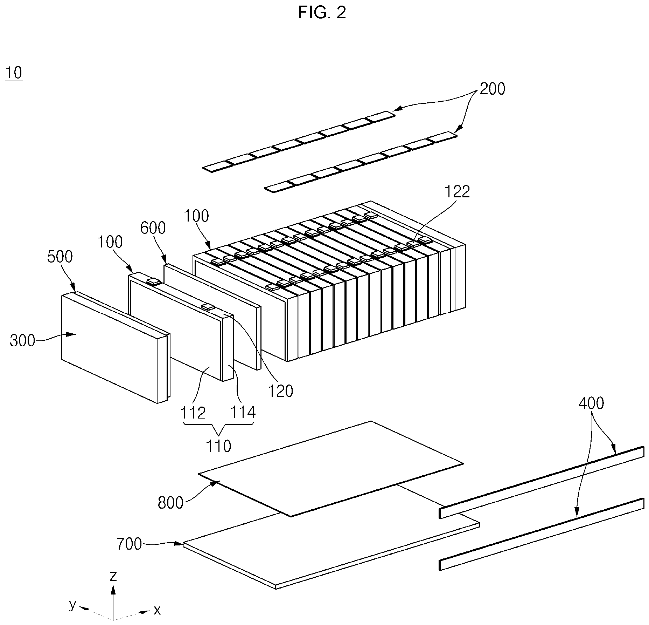

FIG. 1 is a perspective view showing a battery pack 10 according to an embodiment of the present disclosure. FIG. 2 is an exploded perspective view of the battery pack 10 according to FIG. 1.

Referring to FIGS. 1 and 2, the battery pack 10 may include a plurality of battery cells 100, busbars 200 electrically connecting the battery cells 100, an end plate 300 and a side plate 400 for supporting and fixing the battery cells 100, and an insulation plate 500 for insulating the battery cells 100 from the end plate 300. In addition, the battery pack 10 may further include a plurality of insulation members 600 between the battery cells 100 and a cooling plate 700 below the battery cells 100.

In one or more embodiments, each of the battery cells 100 may be a lithiumion secondary battery with a rectangular parallelepiped shape. In one or more embodiments, each of the battery cells 100 has a rectangular parallelepiped shape, and the plurality of battery cells 100 may be arranged in a row along a certain direction (e.g., in the x-axis direction in FIG. 1). The plurality of battery cells 100 may be arranged so that relatively large plate surfaces thereof face each other. The insulation members 600, which will be described later, may be between adjacent battery cells 100 to prevent (or at least mitigate) heat propagation.

Each of the battery cells 100 may include a case 110 in the shape of a rectangular parallelepiped with one side open, an electrode assembly accommodated inside the case 110, and a cap plate 120 coupled to one open side of the case 110 to seal the case 110. An electrode terminal 122 electrically connected to the electrode assembly may be on the cap plate 120.

In one or more embodiments, the case 110 has an open upper surface so that the cap plate 120 can be coupled thereto. The case 110 includes a pair of long sides 112 having a relatively large area, a pair of short sides 114 connecting the long sides 112 and having a relatively small area, and a bottom surface 116 that is a short side surface and forms a bottom of the case 110. The plurality of battery cells 100 are arranged so that long sides 112 of the case 110 face each other. The case 110 may be made of metal such as aluminum or stainless steel.

The electrode assembly is accommodated in the case 110 with an electrolyte (liquid, gel, or solid electrolyte). The electrolyte may be composed of a lithium salt such as LiPF6 or LiBF4 with an organic solvent such as ethylene carbonate (EC), propylene carbonate (PC), diethyl carbonate (DEC), ethylmethyl carbonate (EMC), or dimethyl carbonate (DMC).

In one or more embodiments, the electrode assembly may be configured such that a positive electrode plate and a negative electrode plate are wound or stacked with a separator therebetween. The positive electrode plate and the negative electrode plate may include active material regions having a positive electrode active material and a negative electrode active material each coated on a thin metal foil substrate, and uncoated regions (non-coating regions) without an active material coated thereon. In one or more embodiments, the positive electrode plate may be provided by coating an active material, such as a transition metal oxide, on a substrate provided with a metal foil, such as aluminum foil. In addition, the negative electrode plate may be provided by coating an active material such as carbon, graphite, etc. on a substrate provided with a metal foil such as copper or nickel foil. The positive electrode uncoated portion and the negative electrode uncoated portion may be arranged in opposite directions. A positive electrode tab may be connected to the positive electrode uncoated portion, and a negative electrode tab may be connected to the negative electrode uncoated portion. The positive electrode tab and the negative electrode tab may be electrically connected to the electrode terminals 122 of the positive electrode and the negative electrode, respectively. The busbars 200 may be connected to the electrode terminals 122.

The plurality of busbars 200 may electrically connect adjacent electrode terminals 122 of the plurality of battery cells 100 in series or parallel. The busbars 200 may be mounted on upper portions of the electrode terminals 122 by a busbar holder. The busbars 200 may serve to electrically connect the electrode terminals 122 to the outside.

The end plate 300 includes a pair of end plates that each may have an approximately rectangular parallelepiped shape. The end plates 300 are arranged to face the outermost ones of the battery cells 100. In one or more embodiments, the pair of end plates 300 are arranged to be symmetrical with each other. The end plate 300 may support the plurality of battery cells 100 in the X-axis direction. The side plates 400 may be coupled to both sides of the end plates 300. The insulation plate 500 may be between the end plate 300 and the outermost battery cell 100.

The side plate 400 may be sized to cover at least portions of the side surfaces of the plurality of battery cells 100. The side plate 400 may have a bar or plate shape. The side plate 400 may be arranged in a direction in which a pair of end plates 300 are connected (e.g., the side plates 400 may extend in the X-axis direction).The side plates may be in the form of a bar. In one or more embodiments, a pair of side plates 400, each having a bar shape, are on each side of the end plate 300 in the y-axis direction (e.g., a first pair of side plates 400 on one side of the end plates 300 and a second pair of side plates 400 on another side of the end plates 300). First ends of the pair of side plates 400 may be coupled to the end plate 300 at one end, and second ends of the pair of side plates 400 may be coupled to the end plate 300 at the other end. In one or more embodiments, two pairs of side plates 400 are arranged to be symmetrical (or substantially symmetrical) to each other with the end plate 300 and the battery cells 100 between the two pairs of side plates 400. Therefore, the side plates 400 support the battery cells 100 from the sides. The plurality of battery cells 100 may be physically fastened together by the end plates 300 and the side plates 400. In addition, the side plates 400 may be made of an insulating material. In one or more embodiments in which the side plates 400 are made of a metal material, an insulation tape, etc. may be attached thereto to prevent the side plates 400 from being in contact with the battery cells 100 or being electrically conductive.

The insulation plate 500 may be between the end plate 300 and the outermost battery cell 100 adjacent to the end plate 300. The insulation plate 500 may insulate the battery cells 100 from the end plate 300. The insulation plate 500 may be made of a material configured to provide electrical insulation, prevent (or at least mitigate) heat transfer, and absorb shocks. In one or more embodiments, the insulation plate 500 might not be provided and the end plate 300 may replace the function of the insulation plate 500 without separately providing the insulation plate 500.

The insulation members 600 and the cooling plate 700 may be provided to cool the plurality of battery cells 100, as described above and below.

Each of the insulation members 600 is between adjacent ones of the plurality of battery cells 100, and the cooling plate 700 is below the battery cells 100. The insulation members 600 will be described later.

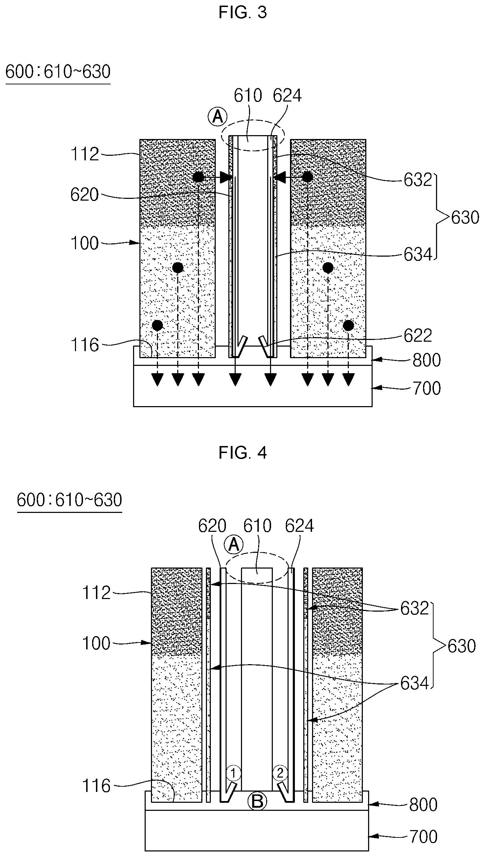

The cooling plate 700 is in close contact with the bottom surfaces of the battery cells 100 (see 116 of FIG. 3). Therefore, the cooling plate 700 may be sized and shaped to at least entirely cover the battery cells 100. In one or more embodiments, the cooling plate 700 may be an aluminum alloy plate having high thermal conductivity. Therefore, the heat generated in the battery cells 100 may be released to the outside by the cooling plate 700.

Additionally, a thermal interface material (TIM) 800 may be between the cooling plate 700 and the bottom surface 116 of each of the battery cells 100. For convenience, FIG. 2 shows the TIM 800 provided similar to a solid-type plate, but the TIM 800 may be applied to the upper surface of the cooling plate 700. In other words, the TIM 800 may have the same form as a coating layer coated on the top surface of the cooling plate 700. The TIM 800 is configured to improve heat transfer performance so that the heat generated from the battery cells 100 can be more easily dissipated through the cooling plate 700. Some of the heat generated from the battery cells 100 is transferred to the cooling plate 700 through the TIM 800. In addition, some of the heat generated from the battery cells 100 may be transferred to the cooling plate 700 through the insulation member 600. However, the cooling plate 700 may be provided without the TIM 800.

Hereinafter, the insulation member 600 will be described in detail with reference to FIGS. 3 to 5.

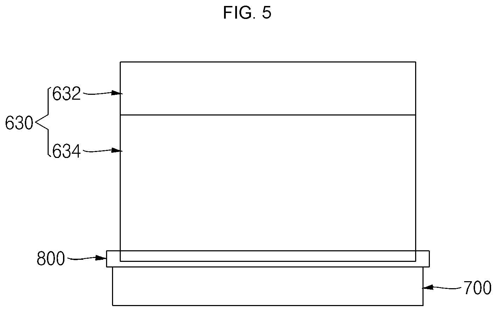

FIG. 3 is a diagram schematically showing cross sections of some cells 100 and an insulation member 600 according to FIG. 1. FIG. 4 is an enlarged schematic diagram showing the structure of the insulation member 600 according to FIG. 3. FIG. 5 is a front view showing a partial structure of the insulation member 600 according to FIG. 3. FIG. 4 shows various components spaced apart from each other to show the structure of the insulation member 600.

As shown in FIG. 3, the insulation member 600 may include an insulation part 610, a first heat transfer part 620, and a second heat transfer part 630 in close contact with each other. In addition, to show the movement of heat, the battery cells 100 and the insulation member 600 are shown as being spaced apart from each other, but the insulation member 600 may be arranged to be in close contact with the battery cells 100. In one or more embodiments, the insulation member 600 and the battery cells 100 may be spaced apart from each other, and a gap between the insulation member 600 and the battery cells 100 may correspond to a gap sufficient to allow for the movement of heat therebetween.

The insulation member 600 may be a substantially square plate, as shown in FIG. 2, when viewed from the outside. The insulation member 600 may include an insulation part 610 on the innermost side, a pair of first heat transfer parts 620 on the outside of the insulation part 610, and a second heat transfer part 630 on the outside of each of the pair of first heat transfer parts 620.

The insulation part 610 is a rectangular plate with a predetermined thickness and may include an insulating material. The insulation part 610 is configured to block heat transfer between neighboring battery cells 100.

The top end of the insulation part 610 may have the same height (or substantially the same height) as or a greater height than the top ends of the battery cells 100. The top ends of the first heat transfer part 620 and the second heat transfer part 630, which will later be described, may also have the same heights (or substantially the same heights) as the top end of the insulation part 610. In addition, the top ends of the first heat transfer part 620 and the second heat transfer part 630 may also have a smaller height (lower height) than the top end of the insulation part 610. Therefore, at least the top end of the insulation part 610 may be at the same height (or substantially the same height) as the top ends of the battery cells 100 or may protrude further upward from the top ends of the battery cells 100 (see region A in FIGS. 3 and 4).

In addition, the insulation part 610 is configured not to be in direct contact with the cooling plate 700. In one or more embodiments, the first heat transfer part 620 has a structure in which the insulation part 610 and the cooling plate 700 are not in direct contact with each other.

In one or more embodiments, the first heat transfer part 620 is a pair of first heat transfer parts 620 between the long side surface 112 of the battery cells 100 and the long side surface of the insulation part 610. That is, the pair of first heat transfer parts 620 are not provided as one body, but are two separate bodies on both long sides of the insulation part 610 (see ① and ② in FIG. 4). Therefore, the insulation part 610 has a structure in which each of the pair of long sides 112 is not direct in contact with the battery cells 100 due to the pair of first heat transfer parts 620. When viewed from the long sides 112 of the battery cells 100 (on the basis of the x-axis direction in FIG. 2), the first heat transfer part 620 may be square (or substantially square). The first heat transfer part 620 may be a metal plate made of aluminum or other metal having high thermal conductivity. When viewed from the short sides 114 of the battery cells 100 (on the basis of the y-axis direction in FIG. 2), the lower end of the first heat transfer part 620 is bent at a predetermined angle to support the insulation part 610. The bent lower end is referred to as the support part 622 (or support portion). A heat conducting layer 624 may be provided on a plate surface of each of the first heat transfer parts 620 facing the insulation part 610.

The support part 622 may be bent at an angle of less than 90 degrees (e.g., the interior angle between the support part 622 and the plate surface of the first heat transfer part 620 may be less than 90 degrees). In one or more embodiments, the first heat transfer part 620 is perpendicular (or substantially perpendicular) to the cooling plate 700, and thus if the support part 622 were bent at 90 degrees there is a possibility that the insulation part 610 may come into contact with the cooling plate 700. Since the insulation part 610 is configured to impede heat transfer, it is desirable that the cooling plate 700 and TIM 800 not be in contact with the insulation part 610 as much as possible. The TIM 800 is applied to the upper surface of the cooling plate 700 and comes into contact with portions of the bottom and side surfaces of the battery cells 100. Therefore, by bending the support part 622 upward at an angle of less than 90 degrees to support the insulation part 610, it is possible to prevent (or at least mitigate) the insulation part 610 from contacting the TIM 800, which is in contact with the cooling plate 700. Accordingly, the support part 622 may be bent such that the insulation part 610 may not come into contact with the TIM 800. This configuration is configured to prevent interference with the first heat transfer part 620 as much as possible when the insulation part 610 contracts or expands due to swelling of the battery cells 100. In addition, the structure of the support part 622 can maximize (or at least increase) contact areas with the first heat transfer part 620 and the TIM 800. That is, in an embodiment in which the first heat transfer part 620 includes the support part 622, compared to when the first heat transfer part 620 is arranged perpendicular to the cooling plate 700, the support part 622 can increase the contact areas with the first heat transfer part 620 and the TIM 800. Therefore, the heat transferred through the first heat transfer part 620 can be quickly transferred to the cooling plate 700 through the TIM 800. In order to maximize (or at least increase) the heat transfer performance, the heat conducting layer 624 is provided on the plate surface of the first heat transfer part 620 that faces the insulation part 610. In addition, the second heat transfer part 630 may be provided on the plate surface of the first heat transfer part 620 that faces the battery cells 100 and faces away from the insulation part 610.

The heat conducting layer 624 may be provided by applying a material having high thermal conductivity to the first heat transfer part 620 or by applying or coating a thermal interface material.

The second heat transfer part 630 may be a coating layer on the surface of the first heat transfer part 620 facing the battery cells 100. In one or more embodiments, the second heat transfer part 630 may be an adhesive sheet on the surface of the first heat transfer part 620 facing the battery cells 100. In one or more embodiments, the second heat transfer part 630 may include a first layer 632 and a second layer 634.

The first layer 632 of the second heat transfer part 630 may be located in a position corresponding to the upper region on the basis of the battery cells 100 in FIG. 3. The first layer 632 has a relatively high thermal conductivity and may include a material capable of efficiently transferring heat. The lower ends of the battery cells 100 are in contact with the TIM 800 and the cooling plate 700, and thus, in response to heat being generated from the battery cells 100, the temperature of the upper region of the battery cells 100 becomes higher than the lower region thereof due to heat conduction. Here, the upper and lower regions of the battery cells 100 should be understood as relative positions, not as absolute positions, according to temperatures. The area of the region being at a higher temperature than the lower region can be experimentally confirmed. The sizes of the first layer 632 and the second layer 634 may be determined accordingly. In one or more embodiments, the first layer 632 may be in a region corresponding to approximately 1/4 to approximately 1/3 of the total height of the battery cells 100. In one or more embodiments, the second layer 634 may be provided in the remaining regions that are not provided with the first layer 632. The first layer 632 is configured to receive the heat from heat-generated portions of the battery cells 100 being at relatively high temperatures. The transferred heat is transferred to the first heat transfer part 620 through the first layer 632 and to the support part 622 along the heat conducting layer 624. Since the support part 622 is in contact with the TIM 800 and the cooling plate 700, the heat generated from the heat-generated portions of the battery cells 100 can be quickly transferred to cooling plate 700.

The second layer 634 may be in a position corresponding to the lower region on the basis of the battery cells 100 in FIG. 3. The second layer 634 may include a material configured to block heat. Since the lower ends of the battery cells 100 are in contact with the TIM 800 and the cooling plate 700, some of the heat generated from the battery cells 100 is moved directly to the cooling plate 700. In addition, since the second layer 634 blocks heat, some of the heat generated from the battery cells 100 is not conducted toward the second layer 634 and moves to the upper ends of the battery cells 100. Therefore, the heat conducted to the upper region of the battery cells 100 can be transferred to the cooling plate 700 through the first heat conducting layer 624, as described above.

As described above, the heat generated from the battery cells 100 can be primarily cooled by the TIM 800 and the cooling plate 700 which are in direct contact with the lower portions of the battery cells 100. Additionally, in one or more embodiments, the movement of heat to the lower side of the battery cells 100 where cooling is performed is blocked (or at least reduced) by the second layer 634. In addition, the heat that has moved, by heat conduction, to the upper side of the battery cells 100, is transferred to the first layer 632 and transferred to the TIM 800 and the cooling plate 700 through the first heat transfer parts 620 (see region B in FIG. 4), to then be secondarily cooled. That is, while heat transfer between neighboring battery cells 100 is blocked by the insulation member 600, direct cooling of the battery cells 100 by the cooling plate 700 and indirect cooling of the battery cells 100 by the insulation member 600 are achieved. Accordingly, the high-temperature heat-generated portions inside the battery cells 100 can be cooled quickly, thereby reducing temperature deviations inside the battery cells 100 and improving the cooling of the battery cells 100.

In addition, the lifespan of the battery cells 100 can be extended by improving cooling performance, and the safety of a battery pack can be improved by preventing an event such as deterioration or heat generation.

According to an embodiment of the present disclosure, a temperature deviation between top and bottom portions of an electrode plate inside a cell can be reduced, thereby improving the cooling performance of the cell.

In addition, the lifespan of a cell can be extended by improving cooling performance, and the safety of a battery pack can be improved by preventing events such as deterioration and heat generation.

While the foregoing embodiment is only one embodiment for carrying out the present disclosure, which is not limited to the embodiment, it will be understood by a person skilled in the art that various changes in form and details may be made therein without departing from the scope of the present disclosure as defined by the following claims.
Embodiments are set out in the following clauses:
Clause 1. A battery pack comprising: a plurality of battery cells; a cooling plate disposed on one side of the battery cells; and an insulation member having an insulation part, a pair of first heat transfer parts disposed on both sides of the insulation part, and a first layer provided in at least a portion of the first heat transfer part and having a higher thermal conductivity than the insulation part.
Clause 2. The battery pack as claimed in clause 1, wherein the insulation part is made of an insulating material.
Clause 3. The battery pack as claimed in clause 2, wherein the insulation part is shaped to correspond to the long sides of the battery cells.
Clause 4. The battery pack as claimed in clause 3, wherein the top end of the insulation part has the same height as the top ends of the battery cells or has a height that protrudes from the top ends of the battery cells.
Clause 5. The battery pack as claimed in clause 4, wherein the first heat transfer part is provided as a pair and disposed between the long sides of the battery cells and the long side of the insulation part.
Clause 6. The battery pack as claimed in clause 5, wherein the first heat transfer part has the same height as the top end of the insulation part or has a height lower than the top end of the insulation part.
Clause 7. The battery pack as claimed in clause 6, wherein the first heat transfer part is a metal plate having higher thermal conductivity than the insulation part.
Clause 8. The battery pack as claimed in clause 7, wherein the cooling plate is placed at the bottom ends of the battery cells.
Clause 9. The battery pack as claimed in clause 8, wherein the first heat transfer part includes a support part in which the lower end facing the cooling plate is bent at a preset angle, and a heat conducting layer provided on the plate surface facing the insulation part and having a higher thermal conductivity than the insulation part.
Clause 10. The battery pack as claimed in clause 9, wherein the support part is bent upward at an angle of less than 90 degrees relative to the cooling plate.
Clause 11. The battery pack as claimed in clause 10, wherein the end of the support part that is bent upward supports the lower end of the insulation part.
Clause 12. The battery pack as claimed in clause 1, wherein the insulation member further includes a second heat transfer part including the first layer and a second layer provided in a region excluding the first layer.
Clause 13. The battery pack as claimed in clause 12, wherein the first layer and the second layer are provided on the plate surface of the first heat transfer part facing the battery cells.
Clause 14. The battery pack as claimed in clause 13, wherein each of the battery cells includes a hexahedral case, an electrode assembly accommodated in the case, a cap plate coupled to the top of the case, and a pair of electrode terminals electrically connected to the electrode assembly and disposed on the cap plate.
Clause 15. The battery pack as claimed in clause 14, wherein the first layer is provided in a region adjacent to the electrode terminal.
Clause 16. The battery pack as claimed in clause 15, wherein the second layer is made of a material having lower thermal conductivity than the first layer.
Clause 17. The battery pack as claimed in clause 16, wherein each of the first layer and the second layer is provided in the form of a coating layer on the first heat transfer part.
Clause 18. The battery pack as claimed in clause 11 or 17, further comprising a thermal interface material (TIM) interposed between the support part, the battery cells, and the cooling plate.

## Claims

1. A battery pack comprising:
a plurality of battery cells;
a cooling plate on one side of the plurality of battery cells; and
an insulation member between adjacent battery cells of the plurality of battery cells, the insulation member comprising an insulation part, a pair of first heat transfer parts on both sides of the insulation part, and a first heat conducting layer on at least a portion of each of the pair of first heat transfer parts, the first heat conducting layer having a higher thermal conductivity than the insulation part.

2. The battery pack as claimed in claim 1, wherein the insulation part comprises an insulating material.

3. The battery pack as claimed in claim 1 or claim 2, wherein the insulation part has a shape corresponding to long sides of the plurality of battery cells.

4. The battery pack as claimed in any one of the preceding claims, wherein a top end of the insulation part has substantially a same height as top ends of the plurality of battery cells or wherein the insulation part has a height that protrudes from the top ends of the plurality of battery cells.

5. The battery pack as claimed in any one of the preceding claims, wherein each of the pair of first heat transfer parts is between a long side of one of the adjacent battery cells and a long side of the insulation part.

6. The battery pack as claimed in any one of the preceding claims, wherein each of the pair of first heat transfer parts has substantially a same height as a top end of the insulation part or wherein each of the pair of first heat transfer parts has a height lower than the top end of the insulation part.

7. The battery pack as claimed in any one of the preceding claims, wherein each of the pair of first heat transfer parts is a metal plate having a higher thermal conductivity than the insulation part.

8. The battery pack as claimed in any one of the preceding claims, wherein the cooling plate is at bottom ends of the plurality of battery cells.

9. The battery pack as claimed in any one of the preceding claims, wherein each of the pair of first heat transfer parts comprises a support part having a lower end facing the cooling plate that is bent at a preset angle, and a heat conducting layer on a plate surface facing the insulation part and having a higher thermal conductivity than the insulation part, and optionally wherein the support part is bent upward at an angle of less than 90 degrees relative to the cooling plate, and/or the lower end of the support part is bent upward and supports a lower end of the insulation part.

10. The battery pack as claimed in any one of the preceding claims, wherein the insulation member further comprises a second heat transfer part including a first layer, and a second layer in a region excluding the first layer, and optionally wherein, when dependent upon claim 9, the first layer and the second layer are on the plate surface of each of the pair of first heat transfer parts facing one of the adjacent battery cells.

11. The battery pack as claimed in any one of the preceding claims, wherein each of the plurality of battery cells includes a hexahedral case, an electrode assembly accommodated in the hexahedral case, a cap plate coupled to a top of the hexahedral case, and a pair of electrode terminals electrically connected to the electrode assembly and on the cap plate.

12. The battery pack as claimed in claim 10 and 11, wherein the first layer is in a region adjacent to the pair of electrode terminals.

13. The battery pack as claimed in any one of the preceding claims, when also dependent upon claim 10, wherein the second layer comprises a material having a lower thermal conductivity than the first layer.

14. The battery pack as claimed in any one of the preceding claims, when also dependent upon claim 10, wherein each of the first layer and the second layer is a coating layer on each of the pair of first heat transfer parts.

15. The battery pack as claimed in any one of the preceding claims, further comprising a thermal interface material (TIM) between the support part, the plurality of battery cells, and the cooling plate.
